# EUROPÄISCHE PATENTANMELDUNG

(11) **EP 1 205 684 A1**
(43) Veröffentlichungstag der Anmeldung: **15.05.2002**
(21) Anmeldenummer: 01125212.9
(22) Anmeldetag: 24.10.2001
(51) Int. Cl.: F16G 13/18, B66F 9/08

(54) **Kette für eine Hubvorrichtung eines Flurförderzeugs**

(30) Priorität: 10.11.2000 DE 10055759
(71) Anmelder: STILL GMBH, D-22113 Hamburg (DE)
(72) Erfinder: Prange, Günter, 21129 Hamburg (DE)
(74) Vertreter: Lang, Michael (DE)

(57) **Zusammenfassung**

Die Erfindung betrifft eine Kette, insesondere Flyerkette, für eine Hubvorrichtung eines Flurförderzeugs. Um die Belastbarkeit der Kette zu erhöhen, besteht diese erfindungsgemäß aus unlegiertem Vergütungsstahl, vorzugsweise Ck60. Die bainitisierte Kette vefügt über eine erhöhte Härte, Festigkeit, Dauer- und Verschleissfestigkeit.

## Beschreibung

Die Erfindung betrifft eine Kette, insbesondere Flyerkette, für eine Hubvorrichtung eines Flurförderzeugs.

Bisher bestehen solche Ketten beispielsweise aus Kettenlaschen, für die gestanztes und anschließend vergütetes (Härten und Anlassen) Federband verwendet wird, und aus Kettenbolzen, für die z.B. die legierten Stähle 42CrMO4, 40MnB6 (vergütet) oder 18MnB5 (einsatzgehärtet) Verwendung finden. Flyerketten bestehen - im Gegensatz zu Rollenketten, die Rollen oder Buchsen aufweisen - nur aus Laschen und Bolzen.

Der vorliegenden Erfindung liegt die Aufgabe zu Grunde, eine Kette der eingangs genannten Art zur Verfügung zu stellen, die belastbarer ist.

Diese Aufgabe wird erfindungsgemäß dadurch gelöst, dass die Kette aus unlegiertem Vergütungsstahl besteht. Ein solcher Werkstoff ist sehr gut für eine Wärmebehandlung geeignet, mit der die Eigenschaften der Kette im Hinblick auf den vorgesehenen Einsatzbereich optimal angepasst, insbesondere im Hinblick auf die bisher verwendeten Kettenwerkstoffe verbessert werden können. Dadurch ist es möglich, die Härte, die Festigkeit und die Dauerfestigkeit der Kette heraufzusetzen. Ferner ergeben sich Vorteile im Hinblick auf eine erhöhte Verschleissfestigkeit. Die Belastbarkeit der erfindungsgemäßen Kette ist verbessert. Dies kann dahingegehend ausgenutzt werden, dass die Querschnittsabmessungen der Kette verringert werden.

Gemäß einer besonders vorteilhaften Ausgestaltung der Erfindung ist die Kette bainitisiert. Bei dieser besonderen Wärmebehandlung, die auch als isothermisches Umwandeln in die Bainitstufe bezeichnet wird (früher auch: Zwischenstufenvergüten), handelt es sich um ein Austenitisieren mit anschließendem raschem Abschrecken auf Temperaturen oberhalb der Mₛ-Linie (Diese Linie definiert den Beginn der Martensit-Bildung). Die Abkühlgeschwindigkeit wird dabei so gewählt, dass keine Umwandlung in der Perlitstufe stattfindet. Beim anschließenden Halten der Temperatur geht das Austenit weitgehend in Bainit über. Das Bainit-Gefüge besteht aus Ferritkristallen mit eingelagerten Carbiden und stellt ein sogenanntes Zwischenstufengefüge dar.

Die beschriebene Wärmebehandlung kann beispielsweise mittels eines Vakuumdurchlaufofens und eines Warmbads erfolgen.

Die Kette besteht gemäß einer Weiterbildung der Erfindung bevorzugt aus Ck60 (neuerdings auch als C60E bezeichnet).

## Patentansprüche

1. Kette, insbesondere Flyerkette, für eine Hubvorrichtung eines Flurförderzeugs, **dadurch gekennzeichnet, dass** die Kette aus unlegiertem Vergütungsstahl besteht.

2. Kette nach Anspruch 1, **dadurch gekennzeichnet, dass** die Kette bainitisiert ist.

3. Kette nach Anspruch 1 oder 2, **dadurch gekennzeichnet, dass** die Kette aus Ck60 besteht.
